# EUROPÄISCHE PATENTSCHRIFT

(11) **EP 1 925 534 B1**
(45) Veröffentlichungstag und Bekanntmachung des Hinweises auf die Patenterteilung: **24.03.2010**
(21) Anmeldenummer: 07021178.4
(22) Anmeldetag: 30.10.2007
(51) Int. Cl.: B62D 25/08

(54) **Federbeinaufnahme eines Kraftfahrzeugs**
Support for the suspension strut of a motor vehicle
Support pour une jambe de suspension d'un véhicule automobile

(30) Priorität: 25.11.2006 DE 102006055730
(43) Veröffentlichungstag der Anmeldung: 28.05.2008
(73) Patentinhaber: Dr. Ing. h.c. F. Porsche Aktiengesellschaft, 70435 Stuttgart (DE)
(72) Erfinder: Herntier, Matthias, 75449 Wurmberg (DE); Walter, Siegfried, 71229 Leonberg (DE); Wrobel, Leszek, 71277 Rutesheim (DE)

(56) Entgegenhaltungen:
- EP-A- 1 400 437
- DE-A1- 2 713 604
- DE-A1-102006 008 667

## Beschreibung

Die vorliegende Erfindung betrifft eine Federbeinaufnahme nach dem Oberbegriff des Anspruchs 1 für ein Fahrzeug, insbesondere einen Personenkraftwagen.

Ein Vorderrad eines Kraftfahrzeugs ist über ein Federbein, welches beispielsweise eine oder mehrere mechanische, hydraulische und/oder elektromechanische Federn und/oder Dämpfer umfassen kann, an dem Fahrzeug abgestützt. Hierzu ist ein oberes Ende des Federbeines an einem Federbeindom einer Federbeinaufnahme angelenkt und stützt sich an diesem Anlenkpunkt ab.

Ein Anlenkpunkt umfasst dabei in mechanischer Idealisierung einen in der Realität linienförmigen oder flächigen Kontakt zwischen Federbein und Federbeindom, wobei das Federbein an dem Federbeindom gleichermaßen fest oder beweglich angelenkt sein. Ist beispielsweise ein nach oben hervorragender Zapfen des oberen Endes des Federbeines durch eine Durchgangsbohrung im Federbeindom hindurch gesteckt und mit diesem verschraubt, so liegt der Anlenkpunkt im Durchstoßpunkt der Federbeinachse durch die Ebene des Federbeindomes.

Aus der US 2005/0046237 A1 ist eine Federbeinaufnahmen bekannt, bei der ein Federbeindom mit einem oberen Domträger, der seitlich neben dem Anlenkpunkt an dem Federbeindom befestigt ist, mit einer A-Säule des Kraftfahrzeugs verbunden ist. Die US 6,209,950 B1 zeigt eine ähnliche Federbeinaufnahme, bei der der Federbeindom sich zusätzlich über einen unteren Domträger an einem Längsträger des Kraftfahrzeugs abstützt.

Eine vom Federbein im Anlenkpunkt in den Federdom eingeleitete Kraft in Richtung der Federbeinlängsachse erzeugt dabei aufgrund der seitlichen Anordnung des oberen Domträgers neben dem Anlenkpunkt nachteilig ein Torsionsmoment, das den oberen Domträger zusätzlich zu dem durch die Kraft hervorgerufenen Biegemoment belastet.

Aus der DE 41 38 395 A1 ist ebenfalls eine Federbeinaufnahme bekannt, bei der ein Federbeindom sich über einen unteren Domträger an dem Längsträger abstützt und über einen separaten oberen Domträger mit der A-Säule verbunden ist. Der mit dem Federbeindom verbundene separate obere Domträger ist als gebogenes Strangpressteil ausgebildet, um bei einem Frontalaufprall kontrolliert zur Fahrzeugmitte hin auszuknicken. Auch hier bewirkt die von dem Federbein in den Anlenkpunkt des Federbeindomes eingeleitete Kraft in Federbeinlängsrichtung ein Torsionsmoment in dem damit seitlich verbundenen oberen Domträger.

Die DE 1 680 014 A offenbart eine Federbeinaufnahme, die direkt in einem seitlichen Radlaufblech ausgebildet ist. Ein separates Versteifungselement ist fahrzeugmittig an einer Stirnwand sowie im Bereich eines oberen Anlenkpunktes eines Federbeins befestigt und mit Einschnürungen ausgebildet, so dass es bei Überschreiten einer bestimmter Druckkraft knickt und keine zu großen Kräfte auf die Spritzwänd ausübt. Von dem Federbein in den Anlenkpunkt eingeleitete Kräfte in Richtung der Federbeinachse kann dieses Versteifungselement daher nicht aufnehmen, es dient hauptsächlich der Versteifung in Fahrzeuglängs- und -querrichtung.

Aus der DE 27 13 604 A ist schließlich eine Federbeinaufnahme nach dem Oberbegriff des Anspruchs 1 mit einem Federbeindom bekannt, der über einen unteren Domträger mit einem Längsträger und über einen oberen Domträger mit einer A-Säule verbunden ist. Die beiden Domträger sind mit dem ringförmigen Federbeindom seitlich an dessen Außenumfang verbunden und verlaufen von diesem schräg nach unten, so dass die Domträger sich bei einem Frontalaufprall aufrichten und der Federbeindom nach oben ausweicht.

Ungünstigerweise muss auch bei dieser Federbeinaufnahme eine von dem Federbein über dessen Anlenkpunkt in den Federbeindom eingeleitete Kraft in Richtung der Federbeinachse in der Verbindungsstelle zwischen Federbeindom und oberem Domträger als Schubspannung in den oberen Domträger übertragen werden, so dass die Festigkeit und Steifigkeit der Federbeinabstützung von dieser Verbindungsstelle limitiert wird.

Aufgabe der vorliegenden Erfindung ist es daher, eine Federbeinaufnahme zur Verfügung zu stellen, bei der von einem Federbein eingeleitete Kräfte im Kraftfahrzeug besser aufgenommen werden.

Zur Lösung dieser Aufgabe ist eine Federbeinaufnahme nach dem Oberbegriff des Anspruchs 1 durch dessen kennzeichnendes Merkmal weitergebildet.

Eine Federbeinaufnahme nach der vorliegenden Erfindung umfasst einen Federbeindom mit wenigstens einem Anlenkpunkt zur Anlenkung des oberen Endes eines Federbeines eines Kraftfahrzeugs. Die Anlenkung kann dabei gleichermaßen fest, beispielsweise über eine Verschraubung und/oder eine formschlüssige Aufnahme eines oder mehrerer Vorsprünge in entsprechenden Aussparungen oder Öffnungen, oder gelenkig, beispielsweise über ein Kugel- oder Scharniergelenk erfolgen.

Als Anlenkpunkt wird dabei insbesondere ein Punkt bezeichnet, in dem eine Kraft in Längsrichtung des Federbeins von dem oberen Ende des Federbeins in den Federbeindom eingeleitet wird. Ein solcher Anlenkpunkt kann beispielsweise auf oder in der Nähe der Mittellinie eines Zapfens des oberen Endes des Federbeines liegen, welcher eine Aussparung im Federbeindom durchgreift. Insbesondere kann der Durchstoßpunkt der Federbeinachse durch den Federbeindom einen Anlenkpunkt im Sinne der vorliegenden Erfindung bilden. Neben dem Anlenkpunkt, auf den die vorliegende Erfindung Bezug nimmt, kann ein Federbein zusätzlich über weitere Befestigungspunkte an dem Federbeindom befestigt sein, über die ebenfalls Kräfte von dem Federbein auf den Federbeindom übertragen werden

Der Federbeindom stützt sich über einen unteren Domträger auf einem Längsträger des Kraftfahrzeuges ab, mit dem der untere Domträger fest oder lösbar verbunden, beispielsweise verschraubt, vernietet, verklebt und/oder verschweißt werden kann. Gleichermaßen kann der untere Domträger einteilig mit dem Längsträger oder einem Teil des Längsträgers ausgebildet sein.

Über einen oberen Domträger kann der Federbeindom mit einer A-Säule des Kraftfahrzeuges verbunden werden. Hierzu kann beispielsweise ein distales Ende, insbesondere ein Flansch, des oberen Domträgers mit der A-Säule oder einem diese umgebenden Blech verschraubt, vernietet, verklebt und/oder verschweißt werden.

Erfindungsgemäß übergreift nun der obere Domträger wenigstens einen Anlenkpunkt, in dem das obere Endes des Federbeines angelenkt ist, so dass die in diesem Anlenkpunkt angreifenden Kräfte von unten in den oberen Domträger eingeleitet werden.

Ein Federbein überträgt in erster Linie Kräfte in seiner Längsrichtung, mit denen ein Vorderrad sich gegen den Fahrzeugaufbau abstützt. Kräfte in anderen Richtungen sowie Drehmomente können zwar zusätzlich auftreten und als Querkräfte, Biege- bzw. Torsionsmomente in dem Anlenkpunkt und/oder über zusätzliche Befestigungspunkte in den Fahrzeugaufbau eingeleitet werden, sind jedoch in der Regel kleiner als die Hauptlast in Federbeinlängsrichtung. Diese Hauptlast wird nun vorteilhaft von unten in den oberen Domträger eingeleitet, der den entsprechenden Anlenkpunkt zu diesem Zweck übergreift. Dadurch treten in dem oberen Domträger keine oder nur geringere Torsionsmomente auf, die insbesondere offene Profile stark verwinden würden.

Zusätzlich stützt sich der obere Teil des Federbeines auch formschlüssig von unten an dem ihn übergreifenden oberen Domträger ab. Dadurch werden Übergangsbereiche zwischen dem Federbeindom, an dem das Federbein angelenkt ist, und dem oberen Domträger vorteilhafterweise nicht oder nur wenig auf Schub belastet.

Damit kann die Hauptlast des Federbeines, die im Regelfall in Richtung von dessen Längsachse auftritt, besonders günstig in den oberen Domträger eingeleitet und von diesem auf die mit ihm verbundene A-Säule übertragen werden. Hierdurch kann die gesamte Federbeinaufnahme, insbesondere ihr oberer Domträger und dessen Anbindung an die A-Säule leichter ausgebildet werden, was das Fahrzeuggesamtgewicht senkt. Zusätzlich oder alternativ kann die Steifigkeit der Federbeinaufnahme vorteilhaft erhöht werden.

Vorteilhafterweise liegt der Anlenkpunkt auf oder in der Nähe der Längsachse des oberen Domträgers, was die durch Kräfte in Längsrichtung des Federbeines induzierten Torsionsmomente reduziert und so ebenfalls die Steifigkeit der Federbeinaufnahme vorteilhaft erhöht.

In einer bevorzugten Ausführung der vorliegenden Erfindung erstreckt sich der obere Domträger im Wesentlichen längs des kürzesten Weges zwischen dem Anlenkpunkt und der A-Säule. Dadurch werden im oberen Domträger und dessen Anbindung an die A-Säule auftretende Biege- und Torsionsmomente reduziert, die aus der in Richtung der Federbeinachse wirkenden und in dem Anlenkpunkt eingeleiteten Längskraft resultieren. Zum anderen wird auch die Länge des oberen Domträgers minimiert. Dadurch kann vorteilhaft auch dessen Gesamtgewicht reduziert werden. Schließlich verringert ein oberer Domträger, der sich im Wesentlichen längs des kürzesten Weges erstreckt, auch den zur Verfügung stehenden Motorraum so wenig wie möglich.

Als kürzester Weg wird dabei derjenige Weg bezeichnet, der sich bei Beachtung der übrigen Randbedingungen wie beispielsweise zu umgreifender Aggregate im Vorderwagen ergibt. Insbesondere kann der kürzeste Weg die direkte Verbindung zwischen Anlenkpunkt und der A-Säule sein. Der obere Querträger muss diesem kürzesten Weg in der bevorzugten Ausführung nicht exakt folgen, kleiner Abweichungen, die sich beispielsweise unter fertigungs- oder montagetechnischen Gesichtspunkten ergeben, sind zulässig.

Bevorzugt erstreckt sich der obere Domträger in Fahrzeugquerrichtung von dem Anlenkpunkt nach außen zur A-Säule hin. Dadurch beeinträchtigt der obere Domträger den im Vorderwagen zur Verfügung stehenden Raum nur wenig. Wird die Federbeinaufnahme bei einem Frontalaufprall zusammen mit dem Längsträger, mit dem sie verbunden ist, in Fahrzeuglängsrichtung nach hinten verschoben, können die nach außen weggeführten oberen Domträger vorteilhaft nach außen wegbrechen, so dass sie nicht in den Fahrgastraum eintreten. Hierdurch wird die Insassensicherheit erhöht. Sind schließlich die A-Säulen einer vorderen Stirnwand vorgelagert, kann sich die Länge der oberen Domträger vorteilhaft durch die Wegführung nach außen verkürzen.

Vorteilhafterweise ist der Anlenkpunkt im Wesentlichen im Dommittelpunkt angeordnet. Dadurch werden die vom oberen Ende des Federbeines eingeleiteten Kräfte in Federbeinlängsrichtung möglichst gleichmäßig in die Federbeinaufnahme eingeleitet und können sich homogen im Federbeindom verteilen.

In einer bevorzugten Ausführung der vorliegenden Erfindung umfasst der obere Domträger ein nach oben offenes U- oder π-Profil, an dessen zwischen zwei Seitenwänden gelegenem Boden eine Aussparung zur Anlenkung des oberen Endes des Federbeines ausgebildet ist. Ein solches offenes Profil stellt bei geringem Gewicht eine hohe Biegesteifigkeit zur Verfügung und kann daher Kräfte in Federbeinlängsrichtung, die das Profil als Querkräfte belasten, besonders geeignet in die A-Säule weiterleiten. Da der obere Domträger erfindungsgemäß den Anlenkpunkt übergreift und die Anlenkung im Inneren des Profils liegt, treten gleichzeitig keine oder nur geringe Torsionsmomente auf, die ein solches offenes Profil andernfalls stark verwinden würden. Besonders bevorzugt kann der Anlenkpunkt im Schubmittelpunkt des Profils oder dessen Nähe angeordnet sein.

In dem Profil können Verstärkungsrippen ausgebildet sein, die sich zwischen den Seitenwänden untereinander und/oder dem Boden des Profils erstrecken. Dadurch kann bei geringem Gewicht eine hohe Steifigkeit des oberen Domträgers dargestellt werden.

Bevorzugt weist der untere Domträger an seinem dem Längsträger zugewandten Ende einen Winkelflansch zur formschlüssigen Abstützung an dem Längsträger auf. Durch den Winkelflansch wirkt die Abstützung dabei vorteilhafterweise in zwei verschiedene Raumrichtungen und erhöht so die Festigkeit und Steifigkeit der Federbeinaufnahme. Zusätzlich erleichtert der Winkelflansch die lagerichtige Positionierung der Federbeinaufnahme auf dem Längsträger und vereinfacht so ihre Montage.

In einer bevorzugten Ausführung sind der Federbeindom und der obere Domträger einstückig miteinander ausgebildet. Hierdurch entfallen Verbindungsstellen zwischen Federbeindom und oberem Domträger, die Federbeinaufnahme kann als ganzes leichter ausgebildet werden, wobei gleichzeitig die von dem Federbein über den Federbeindom in den oberen Domträger eingeleiteten Kräfte in Richtung der Federbeinachse in einem günstigen Kraftfluss, der vorteilhafterweise durch Kerbeinflüsse nicht oder nur geringfügig gestört ist, übertragen werden. Hierzu kann der obere Domträger an seinem von der A-Säule abgewandten Ende direkt in den Federbeindom übergehen, mit dem er den Anlenkpunkt übergreift.

Aus den gleichen Gründen kann der Federbeindom zusätzlich oder alternativ auch einstückig mit dem unteren Domträger ausgebildet sein, so dass sich das Gesamtgewicht der Federbeinaufnahme reduziert und die von dem Federbeindom in den unteren Domträger eingeleiteten Kräfte nicht über separate Verbindungsstellen übertragen werden müssen, die den Kraftfluss stören würden. Zudem kann die einstückige Ausbildung von Federbeindom mit oberem und/oder unterem Domträger den Fertigungsaufwand verringern.

Vorteilhafterweise ist in der vorstehend beschriebenen bevorzugten Ausführung die Federbeinaufnahme als Gussteil, insbesondere als Aluminiumgussteil, hergestellt. Die Ausbildung als Gussteil ermöglicht auf einfache und kostengünstige Weise die Herstellung materialhomogener Federbeinaufnahmen, die auch Rundungen oder Freiformflächen aufweisen können, welche bei spanender Herstellung oder dem Zusammensetzen aus Blechen oder dergleichen nur schwierig herstellbar sind. Aluminium, worunter vorliegend auch Aluminiumlegierungen verstanden werden, bietet bei geringem Gewicht eine hohe Festigkeit und verstärkt so vorteilhaft die Federbeinaufnahme.

Der untere Domträger kann einstückig mit dem Längsträger oder einem Teil von diesem ausgebildet sein. Dadurch entfällt vorteilhaft die separate Anbindung der Federbeinanordnung an den Längsträger, was gleichermaßen Gewicht und Fertigungsaufwand reduzieren kann, während auf der anderen Seite Kräfte besonders günstig in den Längsträger eingeleitet werden können.

In einer bevorzugten Ausführung weist die Federbeinaufnahme eine mit einem Fahrzeugaufbau, insbesondere einer Stirnwand, einem Windlauf und/oder einem Querträger verbindbare Domstrebe auf, die an dem Federbeindom befestigt ist. Eine solche Domstrebe verbindet den bereits über den oberen Domträger an der A-Säule angebundenen Federbeindom zusätzlich mit einem weiteren Element des Fahrzeugaufbaus und erhöht so vorteilhaft die Gesamtsteifigkeit der Federbeinaufnahme. Bevorzugt erstreckt sich die Domstrebe dabei in Fahrzeugquerrichtung nach Innen, so das sie zusammen mit einem sich nach außen erstreckenden oberen Domträger ein Zweibein bildet, welches den Anlenkpunkt an dem Fahrzeugaufbau festlegt und Kräfte besonders günstig in diesen übertragen kann. Zusätzlich kann so eine Ausweichkinematik vorgegeben werden, mit der sich die Federbeinaufnahme im Fall eines Frontalaufpralls bewegt.

Eine solche Domstrebe kann lösbar an dem Federbeindom und dem Fahrzeugaufbau befestigt, beispielsweise verschraubt sein. Dies ermöglicht die Entfernung der Domstrebe, um Zugang zu dem darunter bzw. dahinter liegenden Teil des Vorderwagens zu schaffen. Gleichermaßen löst sich eine solche Domstrebe bei einem durch einen Frontalaufprall bedingten Versatz der Federbeinaufnahme in Fahrzeuglängsrichtung im Allgemeinen in den lösbaren Verbindungsstellen, beispielsweise den Verschraubungen. So kann verhindert werden, dass die Domstreben in den Fahrgastraum eintreten und die Passagiere gefährden.

Eine Federbeinaufnahmeanordnung mit zwei Federbeinaufnahmen nach der vorliegenden Erfindung kann weiter eine Querstrebe umfassen, welche die Domstreben der beiden Federbeinaufnahmen miteinander verbindet. Hierdurch wird die Steifigkeit des gesamten Vorderwagens vorteilhaft erhöht. Insbesondere können unterschiedliche Radlasten, die über die Federbeine eingeleitet werden, über die Querstrebe teilweise ausgeglichen werden, ohne den übrigen Fahrzeugaufbau zu belasten. Zusätzlich verhindert die Querstrebe ein zu tiefes Eindringen der mit ihr verbundenen Domstrebe in den Fahrgastraum und erhöht so die Insassensicherheit noch weiter. Hierzu kann die Querstrebe fest mit den Domstreben verbunden, beispielsweise integral mit diesen ausgebildet oder verschweißt sein.

Nach einer weiteren Ausführung weist die Federbeinaufnahme an einer Innenfläche zu beiden Seiten der Durchgangsbohrung diametral gegenüberliegend jeweils Laschen auf, die zwischen sich Lenker einer Radaufhängung lagernd aufnehmen. Hierdurch ist in voreilhafter Weise eine Federbeinabstützung sowie eine Lenkerlagerung in einem Gussteil integriert. Des Weiteren ist an einer die Durchgangsbohrung aufnehmenden Stützplatte der Federbeinaufnahme randseitig eine hochstehende Haltelasche für eine Drehmomentenstütze eines Motors angeordnet, was ebenfalls in einfacher Bauweise eine Integration der Abstützung in das Gussteil der Federbeinabstützung bewirkt und somit keine zusätzlichen Abstütz- und Haltepunkte am Fahrzeugaufbau geschaffen werden müssen.

Weitere Aufgaben, Vorteile und Merkmale ergeben sich aus den Unteransprüchen und den nachstehend beschriebenen Ausführungsbeispielen. Hierzu zeigt, teilweise schematisiert:
- Fig. 1: einen Teil eines Vorderwagens mit zwei Federbeinaufnahmen nach einer Ausführung der vorliegenden Erfindung in perspektivischer Ansicht,

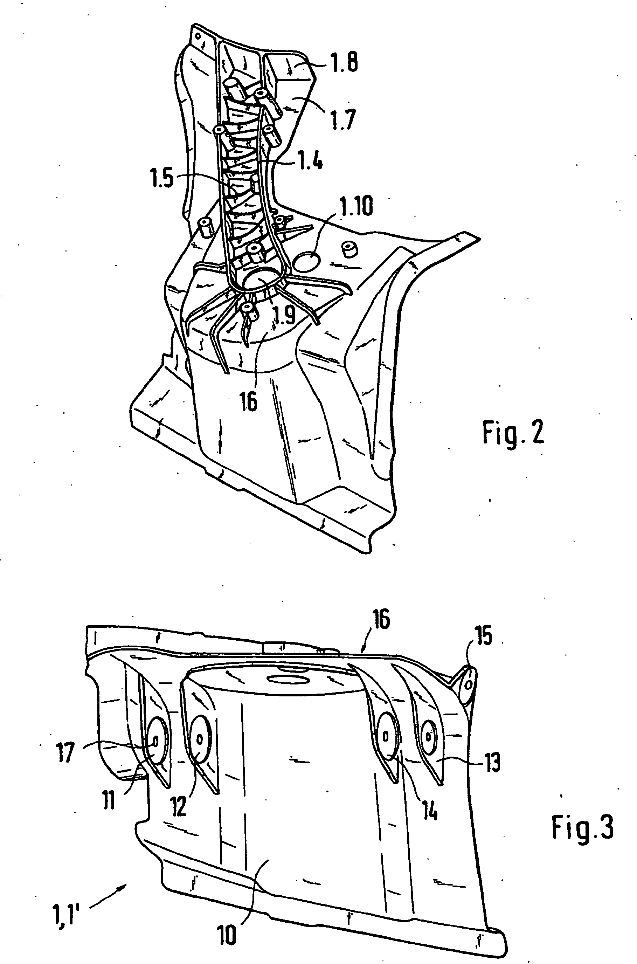

- Fig. 2: die linke Federbeinaufnahme aus Fig. 1 aus einer anderen Perspektive und
- Fig. 3: eine Ansicht auf die Federbeinaufnahme von innen mit Laschen für eine Lenkeraufnahme und einer Haltelasche für eine Drehmomentstütze.

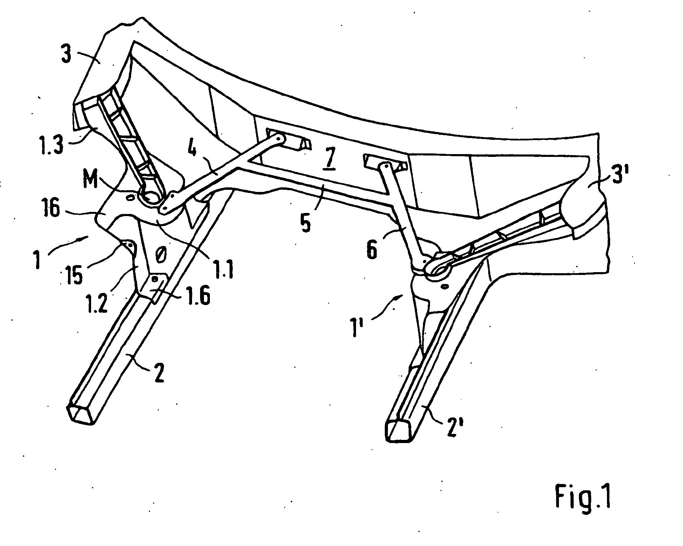

Fig. 1 zeigt in perspektivischer Ansicht von schräg oben einen Teil eines Vorderwagens mit einem rechten und linken Längsträger 2, 2', die über eine Stirnwand 7 in Fahrzeugquerrichtung miteinander verbunden sind. Eine rechte und linke A-Säule 3, 3' schließen die Stirnwand 7 beidseitig ab und sind mit dieser fest verbunden. Jede A-Säule umfasst dabei in nicht dargestellter Weise ein fahrzeuginnenseitiges und ein mit diesem verbundenes fahrzeugaußenseitiges Blech.

Der Vorderwagen umfasst weiter eine rechte Federbeinaufnahme 1 nach einer Ausführung der vorliegenden Erfindung sowie eine linke Federbeinaufnahme 1', die zu der rechten Federbeinaufnahme 1 spiegelsymmetrisch baugleich ist.

Die Federbeinaufnahme 1 bzw. 1' umfasst einen Federbeindom 1.1 zur Aufnahme eines oberen Teiles eines Federbeines (nicht dargestellt). An den im Ausführungsbeispiel im Wesentlichen plattenförmigen Federbeindom 1.1 schließt sich einstückig ein unterer Domträger 1.2 an, mit dem sich die Federbeinaufnahme 1 bzw. 1' am Längsträger 2 abstützt. Hierzu ist sein distales, vom Federbeindom 1.1 abgewandtes Ende mit einem Winkelflansch 1.6 ausgebildet, der sich auf dem Längsträger 2 bzw. 2' mit zwei zueinander geneigten Flanschflächen abstützt und mit dem Längsträger in der oberen Flanschfläche verschraubt ist.

In einer nicht dargestellten Abwandlung des Ausführungsbeispiels sind der untere Domträger 1.2 und ein vorderer Teil des Längsträgers 2, 2' ebenfalls einstückig miteinander ausgebildet. Der vordere Teil des Längsträgers ist etwa in Höhe der Stirnwand 7 mit einem hinteren Teil zum gesamten Längsträger verbunden, beispielsweise gesteckt, verschraubt und/oder verschweißt.

Ein oberer Domträger 1.3 schließt sich ebenfalls einstückig an den Federbeindom 1.1 an. Der obere Domträger 1.3 umfasst dabei ein nach oben offenes π-Profil 1.4, dessen Boden und Seitenwände über Verstärkungsrippen 1.5 miteinander verbunden sind. An seinem distalen, vom Federbeindom 1.1 abgewandten Ende weist der obere Domträger 1.3 einen mit dem π-Profil 1.4 verbundenen Endflansch 1.8 auf, der sich in nicht näher dargestellter Weise formschlüssig an der A-Säule 3 abstützt und an dieser angebunden ist.

Der Federbeindom 1.1 weist in seinem Deckel zwei Durchgangsbohrungen 1.9, 1.10 auf, von denen die größere 1.9 zur Aufnahme eines zapfenförmigen oberen Endes des Federbeines (nicht dargestellt) vorgesehen ist, welches mit der Federbeinaufnahme verschraubt wird. Die kleinere Bohrung 1.10 kann zur Anbindung eines Trägers der Fahrwerksaufhängung oder der Durchführung einer Verkabelung aus dem Vorderwagen in den Radlasten genutzt werden.

Das π-Profil 1.4 übergreift und umschließt die größere, zur Aufnahme des oberen Endes des Federbeines vorgesehene Bohrung 1.9 derart, dass die Bohrung 1.9 auch den inneren Teil des Boden 1.7s des π-Profils 1.4 zwischen dessen Seitenwänden durchsetzt. Der Anlenkpunkt M, an dem eine in Längsrichtung des Federbeines wirkenden Kraft in den Federbeindom 1.1 eingeleitet wird, liegt im Durchtrittspunkt der Federbeinachse durch den Federbeindom 1.1 bzw. den Boden 1.7 des π-Profils 1.4, i.e. in der Mitte der Bohrung 1.9. Diese ist ihrerseits im Wesentlichen im Mittelpunkt des plattenförmigen Federbeindoms 1.1 angeordnet.

Damit stützt sich das obere Ende des Federbeins formschlüssig von unten an dem oberen Domträger 1.3, insbesondere an dessen π-Profil 1.4 ab, der bzw. das zu diesem Zweck den Anlenkpunkt von oben übergreift. Die eingeleiteten Kräfte werden im Wesentlichen als Biegemomente in die A-Säule 3, 3' übertragen, ohne dass das offene π-Profil 1.4 durch größere Torsionsmomente belastet und verwunden wird. Die Rippen 1.5 sowie der über die Seiten hervorragende Teil des Boden 1.7 wirken einer solchen Verwindung zusätzlich entgegen. Hierdurch ergibt sich eine sehr steife Abstützung des Federbeines an der A-Säule 3, 3' bei gleichzeitig geringem Gewicht der Federbeinaufnahme 1, 1'.

Wie insbesondere in Fig. 1 erkennbar, erstreckt sich der obere Domträger 1.3 im Wesentlichen längs des kürzesten Weges vom Anlenkpunkt M zur A-Säule 3, 3', im Ausführungsbeispiel auf einer im wesentlichen horizontalen, geraden oder nur leicht gekrümmten Linie durch den Anlenkpunkt M und die Anbindung an die A-Säule 3, 3'.

Hierdurch werden die im oberen Domträger 1.3 wirkenden und auf die A-Säule 3, 3' übertragenen Biegemomente minimiert, die durch die Kraft in Längsrichtung des Federbeins in den oberen Domträger eingeleitet werden, da sich der wirksame Hebelarm gegenüber einer weiter oben oder unten liegender Anbindung an die A-Säule verkürzt. Zugleich kann die Federbeinaufnahme sehr kompakt und leicht ausgebildet werden und nimmt im Vorderwagen nur wenig Raum ein.

Wie ebenfalls in Fig. 1 erkennbar, erstreckt sich der obere Domträger 1.3 in Fahrzeugquerrichtung von dem Anlenkpunkt M nach außen zu der A-Säule 3, 3'. Im Falle eines Frontalcrashs wird die Federbeinaufnahme 1, 1' in Fahrzeuglängsrichtung nach hinten versetzt. Dabei weicht der obere Domträger 1.3 zur Fahrzeugaußenseite hin aus und dringt nicht in den Fahrgastinnenraum ein, so dass die Insassensicherheit erhöht ist.

Der Federbeindom 1.1, der obere Domträger 1.3 und der untere Domträger 1.2 sind einstückig als Aluminiumgussteil ausgebildet. Dadurch ergibt sich ein gleichermaßen leichtes und festes Bauteil, das nur wenig Nachbearbeitung, beispielsweise am Winkelflansch 1.6, dem Endflansch 1.8 oder der Bohrung 1.9 erfordert.

Eine rohrförmige Domstrebe 4 ist an der Stirnwand 7 und dem Federbeindom 1.1 der rechten Federbeinaufnahme 1 angeschraubt und hierzu an ihren Enden abgeplattet. In gleicher Weise ist eine weitere Domstrebe 6 an der Stirnwand 7 und dem Federbeindom 1.1 der linken Federbeinaufnahme 1' angeschraubt. Beide Domstreben 4, 6 sind über eine Querstrebe 5 miteinander verbunden, die an den beiden Domstreben 4, 6 angeschweißt ist.

Die Domstrebe 4 bildet zusammen mit dem oberen Domträger 1.3 ein Zweibein, mit dem sich der Anlenkpunkt M sowohl in Fahrzeuglängs als auch -querrichtung am Fahrzeugaufbau abstützt. Hierdurch wird eine besonders steife und feste Abstützung der in Richtung der Federbeinachse eingeleiteten Kräfte erzielt, während gleichzeitig durch die Fachwerkanordnung das im oberen Domträger 1.3 bzw. der Domstrebe 4 zu übertragende Biegemoment reduziert wird. Domträger und -strebe können so in jeweils optimaler Weise belastet werden.

Die Querstrebe 5 erhöht zusätzlich die Steifigkeit des Vorderwagens in Fahrzeugquerrichtung. Zugleich können unterschiedliche Radlasten jedenfalls teilweise über die Querstrebe 5 ausgeglichen werden, so dass der Fahrzeugaufbau als ganzes homogener belastet wird.

Im Falle eines Frontalcrashs löst sich die Strebenanordnung aus den Domstreben 4, 6 und der mit diesen verschweißten Querstrebe 5, die ein in sich kompaktes und festes Bauteil bildet, an den Verschraubungen von den Federbeindomen, wenn eine Federbeinaufnahme gewaltsam zum Fahrgastraum hin verschoben wird. Damit wird verhindert, dass die Strebenanordnung in den Fahrgastraum eintritt und dabei Passagiere gefährdet. Sofern diese Sollbruchstellen nicht öffnen und die Domstrebe 4 und/oder die Domstrebe 6 in den Fahrgastraum eindringt, verhindert die Querstrebe 5, die dann zur formschlüssigen Anlage an der Stirnwand 7 gelangt, ein weiteres Eindringen und erhöht so zusätzlich die Insassensicherheit.

Die Federbeinaufnahme 1.1' besteht vorzugsweise aus einem Gussteil, das innenseitig an einer Innenfläche 10 jeweils ein Paar Laschen 11, 12 und 13, 14 aufweist, die zwischen sich einen Radführungslenker einer Radaufhängung aufnehmend lagern. Hierzu stehen die Laschen 11 bis 14 aus der Ebene der Innenfläche 10 hervor und weisen gleichgerichtete Bohrungen 17 für einen nicht dargestellten Lagerbolzen auf. Des Weiteren ist an das Gussteil der Federbeinaufnahme 1.1' eine hochgestellte Haltelasche 15 angeformt, die randseitig einer Stützplatte 16 der Federbeinaufnahme angeordnet ist und zur Verbindung für eine nicht dargestellte Drehmomentstütze eines Motors dient.

## Patentansprüche

1. Federbeinaufnahme (1) zur Aufnahme eines oberen Endes eines Federbeines eines Kraftfahrzeugs, mit einem Federbeindom (1.1) mit einem Anlenkpunkt (M) zur Anlenkung des oberen Endes des Federbeines; einem mit einem Längsträger (2) des Kraftfahrzeuges verbindbaren unteren Domträger (1.2); und einem mit einer A-Säule (3) des Kraftfahrzeuges verbindbaren oberen Domträger (1.3), **dadurch gekennzeichnet, dass** der obere Domträger (1.3) den Anlenkpunkt (M) von oben übergreift und ein nach oben offenes U- oder π-Profil (1.4) umfasst, an dessen Boden eine Aussparung zur Anlenkung des oberen Endes des Federbeines ausgebildet ist und in dem U- bzw. π-Profil (1.4) Verstärkungsrippen (1.5) ausgebildet sind, die mit dem Boden und/oder Seitenwänden des Profils verbunden sind.

2. Federbeinaufnahme nach Anspruch 1, **dadurch gekennzeichnet, dass** der obere Domträger (1.3) sich im Wesentlichen längs des kürzesten Weges zwischen dem Anlenkpunkt (M) und der A-Säule (3) erstreckt.

3. Federbeinaufnahme nach einem der vorhergehenden Ansprüche, **dadurch gekennzeichnet, dass** der obere Domträger (1.3) sich in Fahrzeugquerrichtung von dem Anlenkpunkt (M) nach außen erstreckt.

4. Federbeinaufnahme nach einem der vorhergehenden Ansprüche, **dadurch gekennzeichnet, dass** der Anlenkpunkt (M) im Wesentlichen im Dommittelpunkt angeordnet ist.

5. Federbeinaufnahme nach einem der vorhergehenden Ansprüche, **dadurch gekennzeichnet, dass** der Federbeindom (1.1) und der obere Domträger (1.3) und/oder der untere Domträger (1.2) einstückig miteinander, insbesondere als Gussteil, ausgebildet sind.

6. Federbeinaufnahme nach einem der vorhergehenden Ansprüche, **dadurch gekennzeichnet, dass** der untere Domträger (1.2) an seinem dem Längsträger (2) zugewandten Ende einen Winkelflansch (1.6) zur formschlüssigen Abstützung an dem Längsträger aufweist.

7. Federbeinaufnahme nach einem der vorhergehenden Ansprüche 1 bis 5, **dadurch gekennzeichnet, dass** der untere Domträger (1.2) und der Längsträger (2) einstückig miteinander ausgebildet sind.

8. Federbeinaufnahme nach einem der vorhergehenden Ansprüche, **dadurch gekennzeichnet, dass** sie weiter eine mit einem Fahrzeugaufbau, insbesondere einer Stirnwand (7), einem Windlauf und/oder einem Querträger verbindbare Domstrebe (4, 6) aufweist, die an dem Federbeindom (1.1) befestigt ist.

9. Federbeinaufnahme nach Anspruch 8, **dadurch gekennzeichnet, dass** die Domstrebe (4, 6) sich in Fahrzeugquerrichtung von dem Federbeindom nach innen erstreckt.

10. Federbeinaufnahmeanordnung mit zwei Federbeinaufnahmen nach Anspruch 1, **dadurch gekennzeichnet, dass** sie weiter eine Querstrebe (5) umfasst, welche die Domstreben (4, 6) der beiden Federbeinaufnahmen (1) miteinander verbindet.

11. Federbeinaufnahmeanordnung nach Anspruch 10, **dadurch gekennzeichnet, dass** die Federbeinaufnahme (1.1') an einer Innenfläche (10) zu beiden Seiten einer zur Aufnahme des oberen Endes des Federbeines vorgesehenen Durchgangsbohrung (1.9) diametral gegenüberliegend jeweils Laschen (11, 12 und 13,14) angeformt sind, die zwischen sich Lenker einer Radaufhängung lagernd aufnehmen.

12. Federbeinaufnahmeanordnung nach Anspruch 10, **dadurch gekennzeichnet, dass** an einer eine zur Aufnahme des oberen Endes des Federbeines vorgesehene Durchgangsbohrung (1.9) aufnehmenden Stützplatte (16) randseitig eine hochstehende Haltelasche (15) für eine Drehmomentstütze eines Motors angeordnet ist.

## Claims

1. Spring strut mounting (1) for holding an upper end of a spring strut of a motor vehicle, having a spring strut dome (1.1) with an articulation point (M) for articulatedly connecting the upper end of the spring strut; a lower dome carrier (1.2) which can be connected to a longitudinal member (2) of the motor vehicle; and an upper dome carrier (1.3) which can be connected to an A pillar (3) of the motor vehicle, **characterized in that** the upper dome carrier (1.3) engages over the articulation point (M) from above and comprises an upwardly open U-shaped or Π-shaped profile (1.4), on the base of which is formed a cutout for articulatedly connecting the upper end of the spring strut, and in the U-shaped or Π-shaped profile (1.4) are formed reinforcement ribs (1.5) which are connected to the base and/or side walls of the profile.

2. Spring strut mounting according to Claim 1, **characterized in that** the upper dome carrier (1.3) extends substantially along the shortest path between the articulation point (M) and the A pillar (3).

3. Spring strut mounting according to one of the preceding claims, **characterized in that** the upper dome carrier (1.3) extends outward from the articulation point (M) in the vehicle transverse direction.

4. Spring strut mounting according to one of the preceding claims, **characterized in that** the articulation point (M) is arranged substantially at the dome central point.

5. Spring strut mounting according to one of the preceding claims, **characterized in that** the spring strut dome (1.1) and the upper dome carrier (1.3) and/or the lower dome carrier (1.2) are formed in one piece with one another, in particular as a cast part.

6. Spring strut mounting according to one of the preceding claims, **characterized in that** the lower dome carrier (1.2) has, at its end which faces toward the longitudinal member (2), an angle flange (1.6) for form-fitting support on the longitudinal member.

7. Spring strut mounting according to one of the preceding Claims 1 to 5, **characterized in that** the lower dome carrier (1.2) and the longitudinal member (2) are formed in one piece with one another.

8. Spring strut mounting according to one of the preceding claims, **characterized in that** said spring strut mounting also has a dome strut (4, 6) which can be connected to a vehicle body, in particular a bulkhead (7), a cowl and/or a transverse member, which dome strut (4, 6) is fastened to the spring strut dome (1.1).

9. Spring strut mounting according to Claim 8, **characterized in that** the dome strut (4, 6) extends inward from the spring strut dome in the vehicle transverse direction.

10. Spring strut mounting arrangement having two spring strut mountings according to Claim 1, **characterized in that** said spring strut mounting arrangement also comprises a transverse strut (5) which connects the dome struts (4, 6) of the two spring strut mountings (1) to one another.

11. Spring strut mounting arrangement according to Claim 10, **characterized in that** the spring strut mounting (1.1'), lugs (11, 12 and 13, 14) are in each case integrally formed on an inner face (10) diametrically oppositely at both sides of the through bore (1.9) which is provided for holding the upper end of the spring strut, which lugs (11, 12 and 13, 14) between them hold links of a wheel suspension so as to mount the latter.

12. Spring strut mounting arrangement according to Claim 10, **characterized in that** an upturned holding lug (15) for torque support of a motor is arranged at the edge side on a support plate (16) which holds a through bore which is provided for holding the upper end of the spring strut (1.9).

## Revendications

1. Support (1) pour une jambe de suspension, destiné à recevoir une extrémité supérieure d'une jambe de suspension d'un véhicule automobile, avec un dôme de jambe de suspension (1.1) comportant un point d'articulation (M) pour l'articulation de l'extrémité supérieure de la jambe de suspension; un support de dôme inférieur (1.2) pouvant être attaché à un longeron (2) du véhicule automobile; et un support de dôme supérieur (1.3) pouvant être attaché à la colonne A (3) du véhicule automobile; **caractérisé en ce que** le support de dôme supérieur (1.3) recouvre par le haut le point d'articulation (M) et comprend un profilé en U ou en π (1.4) ouvert vers le haut, dans le fond duquel une découpe est pratiquée pour l'articulation de l'extrémité supérieure de la jambe de suspension et des nervures de renforcement (1.5) sont formées dans le profilé en U ou en π (1.4), qui sont reliées au fond et/ou aux parois latérales du profilé.

2. Support pour une jambe de suspension selon la revendication 1, **caractérisé en ce que** le support de dôme supérieur (1.3) s'étend essentiellement le long du chemin le plus court entre le point d'articulation (M) et la colonne A (3).

3. Support pour une jambe de suspension selon l'une quelconque des revendications précédentes, **caractérisé en ce que** le support de dôme supérieur (1.3) s'étend vers l'extérieur à partir du point d'articulation (M) dans la direction transversale du véhicule.

4. Support pour une jambe de suspension selon l'une quelconque des revendications précédentes, **caractérisé en ce que** le point d'articulation (M) est disposé essentiellement au point central du dôme.

5. Support pour une jambe de suspension selon l'une quelconque des revendications précédentes, **caractérisé en ce que** le dôme de jambe de suspension (1.1) et le support de dôme supérieur (1.3) et/ou le support de dôme inférieur (1.2) sont réalisés en une seule pièce l'un avec l'autre, en particulier sous forme de pièce moulée.

6. Support pour une jambe de suspension selon l'une quelconque des revendications précédentes, **caractérisé en ce que** le support de dôme inférieur (1.2) présente à son extrémité tournée vers le longeron (2) une aile coudée (1.6) permettant l'appui en complémentarité de forme sur le longeron.

7. Support pour une jambe de suspension selon l'une quelconque des revendications précédentes 1 à 5, **caractérisé en ce que** le support de dôme inférieur (1.2) et le longeron (2) sont réalisés en une seule pièce l'un avec l'autre.

8. Support pour une jambe de suspension selon l'une quelconque des revendications précédentes, **caractérisé en ce qu'**il présente en outre une entretoise de dôme (4, 6), pouvant être assemblée à une structure du véhicule, en particulier à une paroi frontale (7), une moulure d'allège et/ou une traverse, et qui est fixée sur le dôme de jambe de suspension (1.1).

9. Support pour une jambe de suspension selon la revendication 8, **caractérisé en ce que** l'entretoise de dôme (4, 6) s'étend vers l'intérieur à partir du dôme de jambe de suspension, dans la direction transversale du véhicule.

10. Agencement de supports de jambe de suspension comportant deux supports de jambe de suspension selon revendication 1, **caractérisé en ce qu'**il comprend en outre une entretoise transversale (5), qui relie l'une à l'autre les entretoises de dôme (4, 6) des deux supports de jambe de suspension (1).

11. Agencement de supports de jambe de suspension selon la revendication 10, **caractérisé en ce que** les supports de jambe de suspension (1, 1') sont munis sur une face interne (10), sur les deux côtés d'un perçage de passage (1.9) prévu pour recevoir l'extrémité supérieure de la jambe de support, de pattes respectives (11, 12 et 13, 14) diamétralement opposées qui reprennent en appui entre elles des bras oscillants d'une suspension de roue.

12. Agencement de support de jambe de suspension selon la revendication 10, **caractérisé en ce qu'**une patte de fixation supérieure (15) servant d'appui pour le couple de rotation d'un moteur est disposée du côté du bord sur une plaque d'appui (16) présentant un perçage de passage (1.9) prévu pour recevoir l'extrémité supérieure de la jambe de support.
